(19) Europäisches Patentamt
European Patent Office
Office européen des brevets

(11) **EP 3 399 189 A1**

(12) **EUROPEAN PATENT APPLICATION**
published in accordance with Art. 153(4) EPC

(43) Date of publication:
**07.11.2018 Bulletin 2018/45**

(51) Int Cl.:
*F04B 39/10* (2006.01)     *C09K 5/04* (2006.01)
*F04C 29/12* (2006.01)     *F16K 1/42* (2006.01)
*F16K 15/16* (2006.01)

(21) Application number: **16881615.5**

(22) Date of filing: **09.12.2016**

(86) International application number:
**PCT/JP2016/086727**

(87) International publication number:
**WO 2017/115636 (06.07.2017 Gazette 2017/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.12.2015 JP 2015255606**

(71) Applicant: **AGC Inc.
Tokyo 100-8405 (JP)**

(72) Inventors:
• **HAYAMIZU, Hiroki
Tokyo 100-8405 (JP)**
• **FUKUSHIMA, Masato
Tokyo 100-8405 (JP)**
• **TAKAGI, Hirokazu
Tokyo 100-8405 (JP)**

(74) Representative: **Müller-Boré & Partner
Patentanwälte PartG mbB
Friedenheimer Brücke 21
80639 München (DE)**

(54) **REFRIGERATION CYCLE DEVICE**

(57)     The refrigeration cycle device performs a refrigeration cycle by compressing, with use of a compressor, a working medium that contains a hydrofluoroolefin (HFO) having a double bond in the molecular structure thereof. The compressor has a compression mechanism for compressing the working medium in a compression chamber, a high-pressure space for storing the compressed working medium discharged from the compression chamber, and a discharge valve that is disposed between the compression chamber and the high-pressure space and enables the working medium to be intermittently discharged from the compression chamber into the high-pressure space. The discharge valve is provided with a temperature increase suppression means for suppressing an increase in the temperature of the discharge valve.

FIG. 7

EP 3 399 189 A1

**Description**

Technical Field

The present invention relates to a refrigeration cycle apparatus.

Background Art

In a refrigeration cycle apparatus such as an air-conditioner or a refrigerator, a hydrofluorocarbon (HFC) based refrigerant has been widely used as a working refrigerant. However, HFCs have a high global warming potential (GWP). Thus, it is pointed out that HFCs may cause global warming. It is therefore imperative to develop a working fluid for refrigeration cycles, which has less influence on an ozone layer and has a low GWP. A working fluid containing a hydrofluoroolefin (HFO) having a carbon-carbon double bond, which is likely to be decomposed by OH radicals in the air, has been studied as a working fluid for refrigeration cycles having less influence on the ozone layer and having less influence on global warming. Patent Document 1 discloses a refrigeration cycle apparatus using a working fluid containing 1,1,2-trifluoroethylene (HFO-1123).

Citation List

Patent Document

Patent Document 1: JP-A-2015-145452

Summary of the Invention

Technical Problems

An HFO having a double bond has a comparatively unstable molecular structure, and thus, the HFO may be decomposed under a high temperature to thereby generate an acid such as hydrofluoric acid. When such an acid is generated within a refrigeration cycle, the acid may corrode a copper refrigerant pipeline within a refrigeration cycle circuit to adversely affect the reliability of the refrigeration cycle apparatus. Therefore, when a working fluid containing an HFO is used in the refrigeration cycle apparatus, it is essential to take a measure to prevent the decomposition of the HFO.
An object of the present invention is to provide a refrigeration cycle apparatus capable of effectively inhibiting decomposition of an HFO when a working fluid containing the HFO is used.

Solution to Problems

A refrigeration cycle apparatus in the first aspect of the present invention is a refrigeration cycle apparatus including a compressor to compress a working fluid containing a hydrofluoroolefin (HFO) having a double bond in a molecular structure thereof to perform a refrigeration cycle,
the refrigeration cycle apparatus comprising a temperature rise inhibiting means which inhibits a temperature rise within the refrigeration cycle.
In a refrigeration cycle apparatus in the second aspect of the present invention, in the above refrigeration cycle apparatus:

the compressor includes a compression mechanism which compresses the working fluid in a compression chamber, a high-pressure space which receives the working fluid which has been compressed in the compression chamber and discharged therefrom, and a discharge valve which is provided between the compression chamber and the high-pressure space and intermittently discharges the working fluid from the compression chamber to the high-pressure space; and
the temperature rise inhibiting means is provided in the discharge valve.

In a refrigeration cycle apparatus in the third aspect of the present invention, in the above refrigeration cycle apparatus:

the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and
resin coating as the temperature rise inhibiting means is applied to a contact portion of the valve seat on which the valve body abuts in the closed state and a contact portion of the valve body on which the valve seat abuts in the closed state.

In a refrigeration cycle apparatus in the fourth aspect of the present invention, in the above refrigeration cycle apparatus:

the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and
resin coating as the temperature rise inhibiting means is applied to a contact portion of the valve seat on which the valve body abuts in the closed state.

In a refrigeration cycle apparatus in the fifth aspect of the present invention, in the above refrigeration cycle apparatus:

the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and
resin coating as the temperature rise inhibiting means is applied to a contact portion of the valve body on which the valve seat abuts in the closed state.

In a refrigeration cycle apparatus in the sixth aspect of the present invention, in the above refrigeration cycle apparatus, the resin coating is a super engineering plastic.
In a refrigeration cycle apparatus in the seventh aspect of the present invention, in the above refrigeration cycle apparatus, the HFO contains 1,1,2-trifluoroethylene.

Advantageous Effects of the Invention

In the present invention, it is possible to effectively inhibit decomposition of an HFO when a working fluid containing the HFO is used.

Brief Description of the Drawings

FIG. 1 is a schematic configuration diagram illustrating an example of a refrigeration cycle apparatus in Embodiment 1.
FIG. 2 is a pressure-enthalpy chart illustrating the state change of a working fluid in the refrigeration cycle apparatus in Embodiment 1.
FIG. 3 is a longitudinal sectional view illustrating the schematic configuration of a compressor in the refrigeration cycle apparatus in Embodiment 1.
FIG. 4 is a cross sectional view taken on IV-IV line in FIG. 3.
FIG. 5 is a top view of an upper closing member 40 including a discharge valve in the compressor.
FIG. 6 is a cross sectional view taken on VI-VI line in FIG. 5.
FIG. 7 is a sectional view illustrating an example of a position where resin coating as a temperature rise inhibiting means is applied in the discharge valve.
FIG. 8 is a sectional view illustrating another example of a position where resin coating as a temperature rise inhibiting means is applied in the discharge valve.
FIG. 9 is a sectional view illustrating further another example of a position where resin coating as a temperature rise inhibiting means is applied in the discharge valve.
FIG. 10 is an enlarged sectional view of the periphery of a discharge valve of a compressor in a refrigeration cycle apparatus in Embodiment 2.

Description of Embodiments

Embodiment 1

Embodiment 1 of the present invention will be described below with reference to the drawings.

First, description will be made about a working fluid for use in a refrigeration cycle apparatus in the present invention.

<Working Fluid>

(Hydrofluoroolefin (HFO))

A working fluid used in the present invention contains a hydrofluoroolefin (HFO). Examples of such HFOs include 1,1,2-trifluoroethylene (HFO-1123), 2,3,3,3-tetrafluoropropene (HFO-1234yf), 1,2-difluoroethylene (HFO-1132), 2-fluoropropene (HFO-1261yf), 1,1,2-trifluoropropene (HFO-1243yc), trans-1,2,3,3,3-pentafluoropropene (HFO-1225ye(E)), cis-1,2,3,3,3-pentafluoropropene (HFO-1225ye(Z)), trans-1,3,3,3-tetrafluoropropene (HFO-1234ze(E)), cis-1,3,3,3-tetrafluoropropene (HFO-1234ze(Z)), 3,3,3-trifluoropropene (HFO-1243zf) and the like. The working fluid preferably contains HFO-1234yf, HFO-1234ze(E) or HFO-1234ze(Z), more preferably contains HFO-1234yf or HFO-1123, and particularly preferably contains HFO-1123.

The working fluid used in the present invention preferably contains HFO-1123, and may further contain, if necessary, optional components that will be described later. The content of HFO-1123 based on 100 mass% of the working fluid is preferably 10 mass% or more, more preferably from 20 to 80 mass%, further more preferably from 40 to 80 mass%, and still further more preferably from 40 to 60 mass%.

(HFO-1123)

The properties of HFO-1123 as working fluid are shown in Table 1 particularly by relative comparison with R410A (a pseudoazeotropic mixture refrigerant of HFC-32 and HFC-125 in a mass ratio of 1:1). Cycle performance is evaluated by a coefficient of performance and refrigeration capacity obtained by the methods that will be described later. The coefficient of performance and the refrigeration capacity of HFO-1123 are expressed by relative values (hereinafter referred to as relative coefficient of performance and relative refrigeration capacity) based on those of R410A as reference (1.000). The global warming potential (GWP) is a 100-years value shown in Intergovernmental Panel on Climate Change (IPCC), Fourth assessment report (2007), and measured in accordance with the method of the same report. In the present specification, GWP means the value unless otherwise specified. When the working fluid is formed of a mixture, the temperature gradient is a significant factor for evaluating the working fluid. It is preferable that the value of the temperature gradient is smaller, as described later.

Table 1

|  | R410A | HFO-1123 |
|---|---|---|
| relative coefficient of performance | 1.000 | 0.921 |
| relative refrigeration capacity | 1.000 | 1.146 |
| temperature gradient [°C] | 0.2 | 0 |
| GWP | 2088 | 0.3 |

[Optional Components]

The working fluid used in the present invention preferably contains HFO-1123. In addition to HFO-1123, optional compounds that are usually used as working fluids may be contained as long as they do not impair the effect of the present invention. Examples of such optional compounds (optional components) include HFCs, HFOs (HFCs each having a carbon-carbon double bond) other than HFO-1123, and other components that can be liquefied or vaporized together with HFO-1123. Preferred optical components are HFCs, and HFOs (HFCs each having a carbon-carbon double bond) other than HFO-1123.

Such an optical component is preferably a compound which can set the GWP or the temperature gradient within an acceptable range while enhancing the relative coefficient of performance and the relative refrigeration capacity when it is, for example, used in a heat cycle together with HFO-1123. When the working fluid contains such a compound together with HFO-1123, better cycle performance can be obtained while keeping the GWP low and the influence of the temperature gradient can be reduced.

(Temperature Gradient)

When the working fluid contains, for example, HFP-1123 and an optical component, the working fluid has a significant temperature gradient as long as HFO-1123 and the optional component do not form an azeotropic composition. The temperature gradient of the working fluid depends on the kind of the optional component and the mixture ratio between HFO-1123 and the optional component.

Usually, when a mixture is used as the working fluid, an azeotropic mixture or a pseudoazeotropic mixture such as R410A is preferably used. A non-azeotropic composition has a problem that a change in composition occurs when the composition is charged into a refrigerator/air-conditioner from a pressure vessel. Further, when a refrigerant leaks from the refrigerator/air-conditioner, there is an extremely great possibility that the composition of the refrigerant within the refrigerator/air-conditioner may change so that the composition of the refrigerant cannot be recovered to its initial state easily. On the other hand, the problem can be avoid if the working fluid is an azeotropic or pseudoazeotropic mixture.

The "temperature gradient" is generally used as an index to evaluate availability of a mixture in the working fluid. The temperature gradient is defined as such a property that the initiation temperature and the completion temperature of evaporation in a heat exchanger such as an evaporator or of condensation in a heat exchanger such as a condenser differ from each other. The temperature gradient is 0 in an azeotropic mixture, and the temperature gradient is very close to 0 in a pseudoazeotropic mixture, for example, the temperature gradient of R410A is 0.2.

When the temperature gradient is large, there is a problem that the inlet temperature, for example, in the evaporator decreases so that frosting is more likely to occur. Further, generally in a heat cycle system, a working fluid flowing in a heat exchanger and a heat source fluid such as water or air are made to flow as counter-current flows against each other in order to improve the heat exchange efficiency. Since the temperature difference of the heat source fluid is small in a stable operation state, it is difficult to obtain a heat cycle system with a good energy efficiency in the case of a non-azeotropic mixture fluid with a large temperature gradient. Accordingly, when a mixture is used as the working fluid, it is desired that the working fluid has an appropriate temperature gradient.

(HFC)

As the HFC as the optional component, it is preferable to select an HFC from the aforementioned viewpoint. Here, an HFC is known to have a high GWP as compared with HFO-1123. Accordingly, as the HFC used in combination with HFO-1123, it is preferable to select an HFC appropriately in order not only to improve cycle performance as the working fluid and set the temperature gradient within a proper range but also to adjust particularly the GWP within an acceptable range.

As an HFC which has less influence on the ozone layer and which has less influence on global warming, an HFC having 1 to 5 carbon atoms is specifically preferred. The HFC may be linear, branched or cyclic.

Examples of the HFC include HFC-32, difluoroethane, trifluoroethane, tetrafluoroethane, HFC-125, pentafluoropropane, hexafluoropropane, heptafluoropropane, pentafluorobutane, heptafluorocyclopentane and the like.

Among them, in view of less influence on the ozone layer and excellent refrigeration cycle performance, preferable examples of the HFC include HFC-32, 1,1-difluoroethane (HFC-152a), 1,1,1-trifluoroethane (HFC-143a), 1,1,2,2-tetrafluoroethane (HFC-134), 1,1,1,2-tetrafluoroethane (HFC-134a) and HFC-125, and more preferable examples thereof include HFC-32, HFC-152a, HFC-134a and HFC-125.

One kind of HFC may be used alone or two or more kinds of HFCs may be used in combination.

The content of the HFC in the working fluid (100 mass%) may be desirably selected depending on required properties of the working fluid. When the working fluid is, for example, made of HFO-1123 and HFC-32, the coefficient of performance and the refrigeration capacity can be improved when the content of HFC-32 falls within the range of from 1 to 99 mass%. When the working fluid is made of HFO-1123 and HFC-134a, the coefficient of performance can be improved when the content of HFC-134a falls within the range of from 1 to 99 mass%.

With respect to GWP of the aforementioned preferred HFC, GWP of HFC-32 is 675, GWP of HFC-134a is 1,430, and GWP of HFC-125 is 3,500. In order to reduce the GWP of the obtainable working fluid, HFC-32 is the most preferable HFC as the optional component.

HFO-1123 and HFC-32 can form a pseudoazeotropic mixture close to an azeotropic mixture when the mass ratio between the both is from 99:1 to 1:99. The mixture of the both has a temperature gradient close to 0 substantially without selecting a composition range thereof. Also with respect to this point, HFC-32 is advantageous as an HFC to be combined with HFO-1123.

When HFC-32 is used together with HFO-1123 in the working fluid used in the present invention, specifically, the content of HFC-32 based on 100 mass% of the working fluid is preferably 20 mass% or more, more preferably from 20 to 80 mass%, and further preferably from 40 to 60 mass%.

When the working fluid used in the present invention, for example, contains HFO-1123, an HFO other than HFO-1123 is preferably HFO-1234yf (GWP = 4), HFO-1234ze(E) or HFO-1234ze(Z) (GWP = 6 in both the (E)-isomer and the (Z)-isomer), and more preferably HFO-1234yf or HFO-1234ze(E) because they are high in critical temperature and excellent in durability and coefficient of performance. One kind of HFOs other than HFO-1123 may be used alone, or two or more kinds of them may be used in combination. The content of the HFO other than HFO-1123 in the working fluid (100 mass%) may be desirably selected depending on required properties of the working fluid. When the working fluid is, for example, made of HFO-1123 and HFO-1234yf or HFO-1234ze, the coefficient of performance can be improved when the content of HFO-1234yf or HFO-1234ze falls within the range of from 1 to 99 mass%.

When the working fluid used in the present invention contains HFO-1123 and HFO-1234yf, a preferred composition range will be shown below as a composition range (S).

In the respective formulae showing the composition range (S), the abbreviation of each compound designates the proportion (mass%) of the compound to the total amount of HFO-1123, HFO-1234yf and other components (HFC-32 and the like).

<Composition Range (S)>

$$HFO\text{-}1123 + HFO\text{-}1234yf \geq 70 \text{ mass\%}$$

$$95 \text{ mass\%} \geq HFO\text{-}1123 \,/\, (HFO\text{-}1123 + HFO\text{-}1234yf) \geq 35 \text{ mass\%}$$

The working fluid in the composition range (S) is extremely low in GWP and small in temperature gradient. In addition, refrigeration cycle performance high enough to replace the R410A in the background art can be exhibited also from the viewpoint of the coefficient of performance, the refrigeration capacity and the critical temperature.

In the working fluid in the composition range (S), the proportion of HFO-1123 to the total amount of HFO-1123 and HFO-1234yf is more preferably from 40 to 95 mass%, further more preferably from 50 to 90 mass%, particularly preferably from 50 to 85 mass%, and most preferably from 60 to 85 mass%.

In addition, the total content of HFO-1123 and HFO-1234yf in 100 mass% of the working fluid is more preferably from 80 to 100 mass%, further more preferably from 90 to 100 mass%, and particularly preferably from 95 to 100 mass%.

In addition, it is preferable that the working fluid used in the present invention contains HFO-1123, HFC-32 and HFO-1234yf. A preferred composition range (P) in a case where the working fluid contains HFO-1123, HFO-1234yf and HFC-32 will be shown below.

In the respective formulae showing the composition range (P), the abbreviation of each compound designates the proportion (mass%) of the compound to the total amount of HFO-1123, HFO-1234yf and HFC-32. The same thing can be also applied to a composition range (R), a composition range (L) and a composition range (M). In addition, in the following composition range, it is preferable that the total amount of HFO-1123, HFO-1234yf and HFC-32 described specifically is more than 90 mass% and 100 mass% or less based on the entire amount of the working fluid for heat cycle.

<Composition Range (P)>

$$70 \text{ mass\%} \leq HFO\text{-}1123 + HFO\text{-}1234yf$$

$$30 \text{ mass\%} \leq HFO\text{-}1123 \leq 80 \text{ mass\%}$$

$$0 \text{ mass\%} < HFO\text{-}1234yf \leq 40 \text{ mass\%}$$

$$0 \text{ mass\%} < HFC\text{-}32 \leq 30 \text{ mass\%}$$

$$HFO\text{-}1123 \, / \, HFO\text{-}1234yf \leq 95/5 \text{ mass}\%$$

The working fluid having the above composition range is a working fluid having respective properties of HFO-1123, HFO-1234yf and HFC-32 in a balanced manner, and avoiding defects of the respective components. That is, the working fluid is a working fluid which has an extremely low GWP, and has a small temperature gradient and a certain performance and efficiency when used for heat cycle, and thus, favorable cycle performance will be obtained by the working fluid. Here, it is preferable that the total amount of HFO-1123 and HFO-1234yf is 70 mass% or more based on the total amount of HFO-1123, HFO-1234yf and HFC-32.

A more preferred composition as the working fluid used in the present invention may be a composition containing HFO-1123 in an amount of from 30 to 70 mass%, HFO-1234yf in an amount of from 4 to 40 mass%, and HFC-32 in an amount of from 0 to 30 mass%, based on the total amount of HFO-1123, HFO-1234yf and HFC-32 and having a content of HFO-1123 in a proportion of 70 mol% or less based on the entire amount of the working fluid. The working fluid within the aforementioned range is a working fluid in which self-decomposition reaction of HFO-1123 is inhibited to enhance the durability in addition to the aforementioned effect enhanced. From the viewpoint of the relative coefficient of performance, the content of HFC-32 is preferably 5 mass% or more, and more preferably 8 mass% or more.

Other preferred compositions in the case where the working fluid used in the present invention contains HFO-1123, HFO-1234yf and HFC-32 will be shown below. A working fluid in which self-decomposition reaction of HFO-1123 is inhibited to enhance the durability can be obtained as long as the content of HFO-1123 is 70 mol% or less based on the entire amount of the working fluid.

A more preferred composition range (R) will be shown below.

<Composition Range (R)>

$$10 \text{ mass}\% \leq HFO\text{-}1123 < 70 \text{ mass}\%$$

$$0 \text{ mass}\% < HFO\text{-}1234yf \leq 50 \text{ mass}\%$$

$$30 \text{ mass}\% \leq HFC\text{-}32 \leq 75 \text{ mass}\%$$

The working fluid having the above composition is a working fluid having respective properties of HFO-1123, HFO-1234yf and HFC-32 in a balanced manner, and avoiding defects of the respective components. That is, the working fluid is a working fluid which has a low GWP and ensures durability while having a small temperature gradient and having a high performance and efficiency when used for heat cycle, and thus, favorable cycle performance will be obtained by the working fluid.

A preferred range in the working fluid having the composition range (R) of the present invention will be shown below.

$$20 \text{ mass}\% \leq HFO\text{-}1123 < 70 \text{ mass}\%$$

$$0 \text{ mass}\% < HFO\text{-}1234yf \leq 40 \text{ mass}\%$$

$$30 \text{ mass}\% < HFC\text{-}32 \leq 75 \text{ mass}\%$$

The working fluid having the above composition is a working fluid having respective properties of HFO-1123, HFO-1234yf and HFC-32 in a balanced manner, and avoiding defects of the respective components. That is, the working fluid is a working fluid which has a low GWP and ensures durability, while having a smaller temperature gradient and having a higher performance and efficiency when used for heat cycle, and thus, favorable cycle performance will be obtained by the working fluid.

A more preferable range (L) in the working fluid having the composition range (R) of the present invention will be shown below. A composition range (M) is further more preferable.

<Composition Range (L))

$$10 \text{ mass}\% \leq \text{HFO-1123} < 70 \text{ mass}\%$$

$$0 \text{ mass}\% < \text{HFO-1234yf} \leq 50 \text{ mass}\%$$

$$30 \text{ mass}\% < \text{HFC-32} \leq 44 \text{ mass}\%$$

<Composition Range (M))

$$20 \text{ mass}\% \leq \text{HFO-1123} < 70 \text{ mass}\%$$

$$5 \text{ mass}\% \leq \text{HFO-1234yf} \leq 40 \text{ mass}\%$$

$$30 \text{ mass}\% < \text{HFC-32} \leq 44 \text{ mass}\%$$

The working fluid having the composition range (M) is a working fluid having respective properties of HFO-1123, HFO-1234yf and HFC-32 in a balanced manner, and avoiding defects of the respective components. That is, the working fluid is a working fluid in which an upper limit of GWP is reduced to 300 or less and durability is ensured and which has a small temperature gradient smaller than 5.8 and has a relative coefficient of performance and a relative refrigeration capacity close to 1 when used for heat cycle, and thus, favorable cycle performance will be obtained by the working fluid.

Within this range, the upper limit of the temperature gradient is decreased, and the lower limit of the product of the relative coefficient of performance and the relative refrigeration capacity is increased. In order to increase the relative coefficient of performance, it is more preferable to satisfy "8 mass% ≤ HFO-1234yf". In addition, in order to increase the relative refrigeration capacity, it is more preferable to satisfy "HFO-1234yf ≤ 35 mass%".

In addition, it is preferable that another working fluid used in the present invention contains HFO-1123, HFC-134a, HFC-125 and HFO-1234yf. With this composition, flammability of the working fluid can be controlled.

More preferably, in the working fluid containing HFO-1123, HFC-134a, HFC-125 and HFO-1234yf, the proportion of the total amount of HFO-1123, HFC-134a, HFC-125 and HFO-1234yf is more than 90 mass% and 100 mass% or less based on the entire amount of the working fluid, and the proportion of HFO-1123 is 3 mass% or more and 35 mass% or less, the proportion of HFC-134a is 10 mass% or more and 53 mass% or less, the proportion of HFC-125 is 4 mass% or more and 50 mass% or less, and the proportion of HFO-1234yf is 5 mass% or more and 50 mass% or less, based on the total amount of HFO-1123, HFC-134a, HFC-125 and HFO-1234yf. Such a working fluid is a working fluid being non-flammable, having excellent safety, having less influence on the ozone layer and global warming, and having excellent cycle performance when used for a heat cycle system.

Most preferably, in the working fluid containing HFO-1123, HFC-134a, HFC-125 and HFO-1234yf, the proportion of the total amount of HFO-1123, HFC-134a, HFC-125 and HFO-1234yf is more than 90 mass% and 100 mass% or less based on the entire amount of the working fluid, and the proportion of HFO-1123 is 6 mass% or more and 25 mass% or less, the proportion of HFC-134a is 20 mass% or more and 35 mass% or less, the proportion of HFC-125 is 8 mass% or more and 30 mass% or less, and the proportion of HFO-1234yf is 20 mass% or more and 50 mass% or less, based on the total amount of HFO-1123, HFC-134a, HFC-125 and HFO-1234yf. Such a working fluid is a working fluid being non-flammable, having more excellent safety, having much less influence on the ozone layer and global warming, and having more excellent cycle performance when used for a heat cycle system.

(Other Optional Components)

The working fluid used in a composition for a heat cycle system in the present invention may contain, carbon dioxide, a hydrocarbon, a chlorofluoroolefin (CFO), a hydrochlorofluoroolefin (HCFO) and the like, other than the aforementioned optional component. As the other optional component, a component which has less influence on the ozone layer and has less influence on global warming is preferred.

Examples of the hydrocarbon include propane, propylene, cyclopropane, butane, isobutane, pentane, isopentane and the like.

One kind of such hydrocarbons may be used alone or two or more kinds of them may be used in combination.

When the working fluid contains a hydrocarbon, its content is less than 10 mass%, preferably from 1 to 5 mass%, and more preferably from 3 to 5 mass%, based on 100 mass% of the working fluid. When the content of the hydrocarbon is equal to or more than the lower limit, the solubility of a mineral refrigerator oil in the working fluid will be more favorable.

Examples of the CFO include chlorofluoropropene, chlorofluoroethylene and the like. In order to easily control flammability of the working fluid without significantly decreasing the cycle performance of the working fluid, the CFO is preferably 1,1-dichloro-2,3,3,3-tetrafluoropropene (CFO-1214ya), 1,3-dichloro-1,2,3,3-tetrafluoropropene (CFO-1214yb) or 1,2-dichloro-1,2-difluoroethylene (CFO-1112).

One kind of such CFOs may be used alone or two or more kinds of them may be used in combination.

When the working fluid contains the CFO, its content is less than 10 mass%, preferably from 1 to 8 mass%, and more preferably from 2 to 5 mass%, based on 100 mass% of the working fluid. When the content of the CFO is equal to or more than the lower limit, the flammability of the working fluid can be easily controlled. When the content of the CFO is equal to or less than the upper limit, favorable cycle performance is likely to be obtained.

Examples of the HCFO include hydrochlorofluoropropene, hydrochlorofluoroethylene and the like. In order to easily control the flammability of the working fluid without significantly decreasing the cycle performance of the working fluid, the HCFO is preferably 1-chloro-2,3,3,3-tetrafluoropropene (HCFO-1224yd) or 1-chloro-1,2-difluoroethylene (HCFO-1122).

One kind of such HCFOs may be used alone or two or more kinds of them may be used in combination.

In a case where the working fluid contains the HCFO, the content of the HCFO is less than 10 mass%, preferably from 1 to 8 mass%, and more preferably from 2 to 5 mass%, based on 100 mass% of the working fluid. When the content of the HCFO is equal to or more than the lower limit, the flammability of the working fluid can be easily controlled. When the content of the HCFO is equal to or less than the upper limit, favorable cycle performance is likely to be obtained.

When the working fluid used in the present invention contains the aforementioned other optional component(s), the total content of the other optional components in the working fluid is less than 10 mass%, preferably 8 mass% or less, and more preferably 5 mass% or less, based on 100 mass% of the working fluid.

<Configuration of refrigeration cycle apparatus>

Next, the schematic configuration of a refrigeration cycle apparatus in the present embodiment will be described.

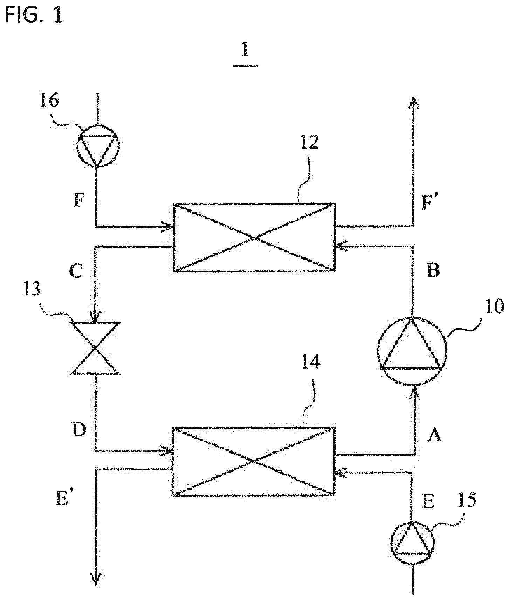

FIG. 1 is a diagram illustrating the schematic configuration of a refrigeration cycle apparatus 1 in the present embodiment. The refrigeration cycle apparatus 1 includes a compressor 10, a condenser 12, an expansion mechanism 13 and an evaporator 14. The compressor 10 compresses a working fluid (vapor). The condenser 12 cools and liquefies the vapor of the working fluid discharged from the compressor 10. The expansion mechanism 13 expands the working fluid (liquid) discharged from the condenser 12, The evaporator 14 heats and vaporizes the working fluid (liquid) discharged from the expansion mechanism 13. The evaporator 14 and the condenser 12 are configured to perform heat exchange between the working fluid and a heat source fluid flowing in opposition or in parallel thereto. The refrigeration cycle apparatus 1 further includes a fluid supply means 15 that supplies a heat source fluid E such as water or air to the evaporator 14, and a fluid supply means 16 that supplies a heat source fluid F such as water or air to the condenser 12.

In the refrigeration cycle apparatus 1, the following refrigeration cycle is repeated. First, a working fluid vapor A discharged from the evaporator 14 is compressed by the compressor 10 to form a high-temperature and high-pressure working fluid vapor B. Then, the working fluid vapor B discharged from the compressor 10 is cooled and liquefied by the heat source fluid F in the condenser 12 to form a working fluid C. At that time, the heat source fluid F is heated to form a heat source fluid F', which is discharged from the condenser 12. Successively the working fluid C discharged from the condenser 12 is expanded in the expansion mechanism 13 to form a working fluid D which is a low-temperature and low-pressure liquid. Successively the working fluid D discharged from the expansion mechanism 13 is heated by the heat source fluid E in the evaporator 14 to form a working fluid vapor A. At that time, the heat source fluid E is cooled and becomes a heat source fluid E', which is discharged from the evaporator 14.

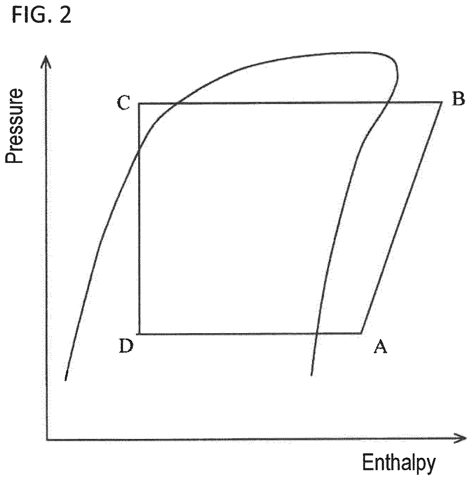

FIG. 2 is a pressure-enthalpy chart illustrating the state change of the working fluid in the refrigeration cycle apparatus 1. As illustrated in FIG. 2, in the process of a state change from A to B, adiabatic compression is carried out by the compressor 10 to change the low-temperature and low-pressure working fluid vapor A to the high-temperature and high-pressure working fluid vapor B. In the process of a state change from B to C, isobaric cooling is carried out by the condenser 12 to change the working fluid vapor B to the working fluid C. In the process of a state change from C to D, isenthalpic expansion is carried out by the expansion mechanism 13 to change the high-temperature and high-pressure working fluid C to the low-temperature and low-pressure working fluid D. In the process of a state change from D to A, isobaric heating is carried out by the evaporator 14 to return the working fluid D to the working fluid vapor A.

Next, the configuration of the compressor 10 will be described.

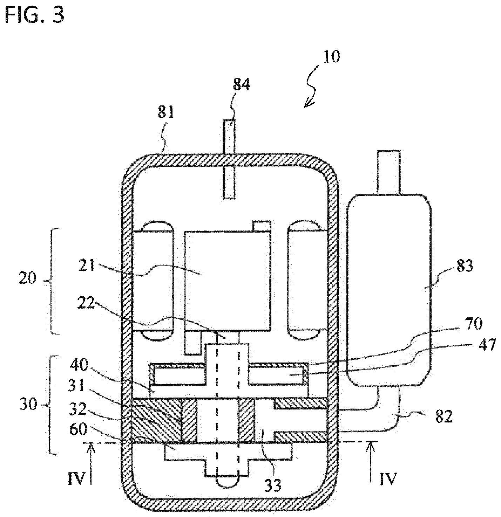

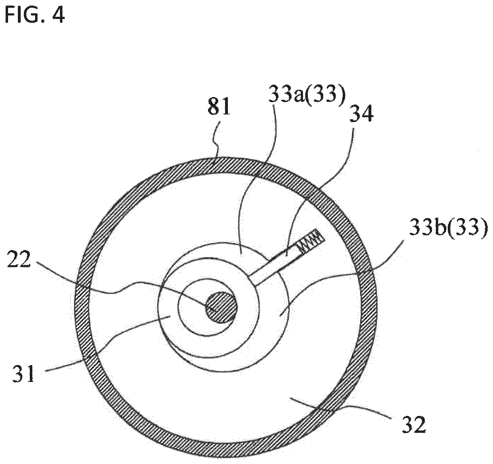

FIG. 3 is a longitudinal sectional view illustrating the schematic configuration of the compressor 10. FIG. 4 is a cross sectional view taken on IV-IV line in FIG. 3. In the present embodiment, the compressor 10 is a rotary compressor. As illustrated in FIG. 3 and FIG. 4, the compressor 10 includes a casing 81, a compression mechanism 30 that compresses a low-temperature and low-pressure working fluid (gas) sucked from an accumulator 83 through a suction pipe 82, and a drive mechanism 20 that drives the compression mechanism 30. As illustrated in FIG. 3, in the internal space of the casing 81, the drive mechanism 20 is disposed on the upper side, and the compression mechanism 30 is disposed on the lower side.

As illustrated in FIG. 3, the compression mechanism 30 includes a roller 31, a cylinder 32, an upper closing member 40 and a lower closing member 60. The roller 31 is disposed inside the cylinder 32. A compression chamber 33 is formed between the inner circumferential surface of the cylinder 32 and the roller 31. As illustrated in FIG. 4, the compression chamber 33 is divided into two compression chambers 33a and 33b by a vane 34. One end of the vane 34 is urged toward the outer circumference of the roller 31 by an urging means such as a spring provided at the other end of the vane 34.

As illustrated in FIG. 3, the upper closing member 40 closes the upper side of the cylinder 32. The lower closing member 60 closes the lower side of the cylinder 32. In addition, the upper closing member 40 and the lower closing member 60 serve as bearing to pivotally support a driving shaft 22 which will be described later. The drive mechanism 20 includes a motor 21 as a driving source, and the driving shaft 22 that transmits the driving force of the motor 21 to the compression mechanism 30.

The driving shaft 22 rotationally drives the roller 31 of the compression mechanism 30. When the roller 31 is rotationally driven inside the compression chamber 33, the working fluid in the compression chamber 33 is compressed. A discharge valve 43 which will be described later is provided in the upper closing member 40. The high-temperature and high-pressure working fluid compressed inside the compression chamber 33 is discharged from a discharge pipe 84 through the discharge valve 43.

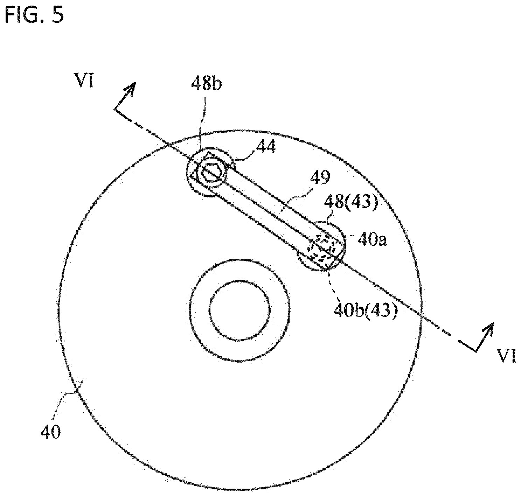

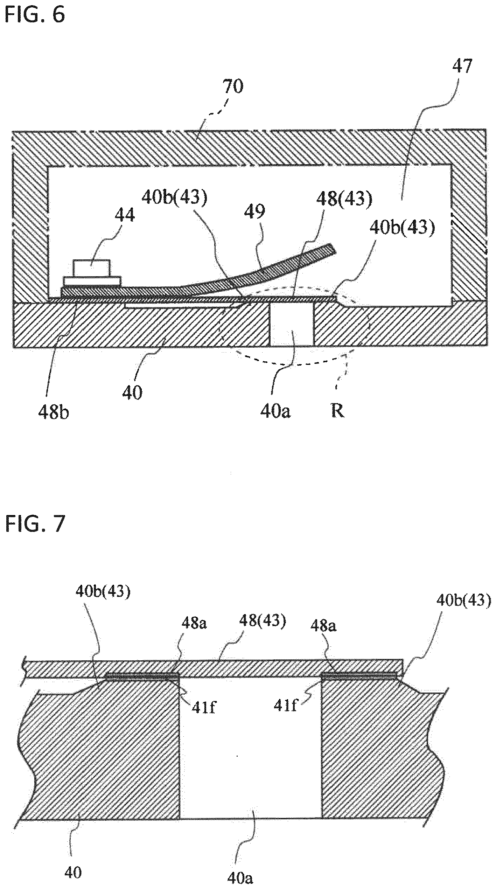

FIG. 5 is a top view of the upper closing member 40 including the discharge valve 43. FIG. 6 is a sectional view taken on VI-VI line in FIG. 5. As illustrated in FIG. 5 and FIG. 6, a discharge hole 40a serving as a flow path of the working fluid which has been compressed is formed in the upper closing member 40. A muffler 70 is attached to the upper surface of the outer circumferential portion of the upper closing member 40. Thus, a high-pressure space 47 is formed between the upper closing member 40 and the muffler 70 (see FIG. 6). The high-pressure space 47 and the inside of the cylinder 32 (see FIG. 3) communicate with each other through the discharge hole 40a. That is, the high-pressure space 47 receives the compressed working fluid discharged from the compression chamber 33 (see FIG. 3).

The discharge valve 43 is constituted by a valve seat 40b and a valve body 48. The valve seat 40b protrudes toward the high-pressure space 47 in the periphery of the discharge hole 40a. That is, the valve seat 40b protrudes on the upper side from the upper surface of the upper closing member 40. The valve body 48 is a thin plate member made of metal. The valve body 48 opens and closes the discharge hole 40a. A base end portion 48b of the valve body 48 is fixed to the upper surface of the upper closing member 40 by a bolt 44. Above the valve body 48, a pressure member 49 is provided to regulate the opening of the valve body 48.

As illustrated in FIG. 6, the discharge hole 40a is in a closed state when the valve body 48 abuts on the valve seat 40b, and the discharge hole 40a is in an open state when the valve body 48 separates from the valve seat 40b. Specifically, when the pressure in the internal space of the discharge hole 40a is lower than the pressure in the high-pressure space 47, the valve body 48 abuts on the valve seat 40b and the discharge hole 40a is in the closed state. On the contrary, when the pressure in the internal space of the discharge hole 40a is higher than the pressure in the high-pressure space 47, the valve body 48 is elastically deformed so that the valve body 48 separates from the valve seat 40b and the discharge hole 40a is in the open state.

Next, description will be made about decomposition of an HFO causing a problem when a refrigerant containing the HFO having a double bond in its molecular structure is used as the working fluid. In the following description, FIG. 1 is referred to if necessary.

As described above, a refrigerant containing an HFO having a double bond in its molecular structure is used as the working fluid in the refrigeration cycle apparatus 1 illustrated in FIG. 1. When the temperature of the HFO reaches at least a certain temperature under a certain pressure, the HFO is highly likely to be decomposed to generate an acid such as hydrofluoric acid, formic acid or acetic acid. The acid generated due to the decomposition of the HFO corrodes a metal component within a refrigeration cycle to form an inorganic sludge of a metal salt, which itself serves as a catalyst to promote the decomposition of the HFO. In addition, when the sludge is generated within the refrigeration cycle, a decompression mechanism portion (expansion mechanism 13) is clogged with the sludge to thereby increase the pressure of the working fluid which has been compressed by the compressor 10 (high compression ratio operation). Thus, the reliability of the compressor 10 is lost.

Further, assuming that a refrigerant, for example, containing HFO-1123 which is one of HFOs each having a double bond in its molecular structure is used as the working fluid in the refrigeration cycle apparatus 1, when the expansion mechanism 13 is clogged with sludge generated by decomposition of the HFO-1123 to thereby increase the discharge pressure and initiate a high compression ratio operation, the fear of leading to the occurrence of a disproportionation reaction of the HFO-1123 is increased. The disproportionation reaction is a chain chemical reactions with heat generation, which may occur when local energy is applied under high temperature or high pressure.

From such a reason, when an HFO having a double bond in its molecular structure is used as the working fluid in the refrigeration cycle apparatus 1, it is necessary to inhibit a temperature rise causing decomposition of the HFO within a refrigeration cycle. In the present invention, a temperature rise inhibiting means that inhibits a temperature rise causing decomposition of the HFO within a refrigeration cycle is provided in the refrigeration cycle apparatus 1. A temperature at which the HFO having a double bond in its molecular structure is not decomposed under a certain pressure can be obtained by experiments or the like. For example, it has been confirmed by experiments that HFO-1123 which is one of HFOs each having a double bond in its molecular structure is not decomposed under the atmospheric pressure and at an atmosphere not higher than 175°C.

Within the refrigeration cycle, the temperature of the working fluid is apt to increase particularly inside the compressor 10. Three factors, that is, a temperature rise caused by adiabatic compression (Factor 1), a temperature rise caused by compression loss (Factor 2) and a temperature rise caused by mechanical loss (Factor 3) are conceivable as the factors of the temperature rise of the refrigerant inside the compressor 10. Factor 1 is a temperature rise which cannot be avoided theoretically. This is because the temperature of the working refrigerant increases when it is subjected to adiabatic compression in the compressor 10. Factor 2 is a temperature rise caused by power loss which is generally called compression loss, such as pressure loss, leakage or heat receiving, occurring in the compression process of the working fluid gas. Factor 3 is a temperature rise caused by power loss which is generally called mechanical loss, such as frictional heat, generated in each sliding portion. Inside the compressor 10 illustrated in FIG. 3, frictional heat is generated in a sliding part where metals abut each other, so that the temperature rises.

As for Factor 3, for example, in the discharge valve 43 illustrated in FIG. 5 and FIG. 6, frictional heat is generated by friction between the valve body 48 and the contact portion of the valve seat 40b when the valve body 48 hits against the contact portion of the valve seat 40b repeatedly. In addition, the high-temperature and high-pressure working fluid compressed inside the compression chamber 33 of the compression mechanism 30 is intermittently discharged into the high-pressure space 47 through the discharge hole 40a and the discharge valve 43 depending on the opening and closing of the discharge valve 43. Thus, particularly the temperature of the discharge valve 43 increases easily inside the compressor 10.

In the present embodiment, a temperature rise inhibiting means is provided in the discharge valve 43 which is apt to reach a high temperature particularly inside the compressor 10. Specifically, resin coating is applied as the temperature rise inhibiting means in order to control the temperature of the discharge valve 43 so that the temperature does not rise to at least the temperature at which the HFO is decomposed under the pressure of the working fluid compressed by the compression mechanism 30 (see FIG. 3).

FIG. 7 is a sectional view illustrating an example of a position where resin coating is applied as the temperature rise inhibiting means in the discharge valve 43. FIG. 7 is an enlarged view of the part enclosed by the broken line R in FIG. 6. As illustrated in FIG. 7, resin coating is applied to the contact portion of the valve seat 40b on which the valve body 48 abuts when the discharge hole 40a is in the closed state (valve seat coating portion 41f). In addition, resin coating is applied to the contact portion of the valve body 48 on which the valve seat 40b abuts when the discharge hole 40a is in the closed state (valve body coating portion 48a).

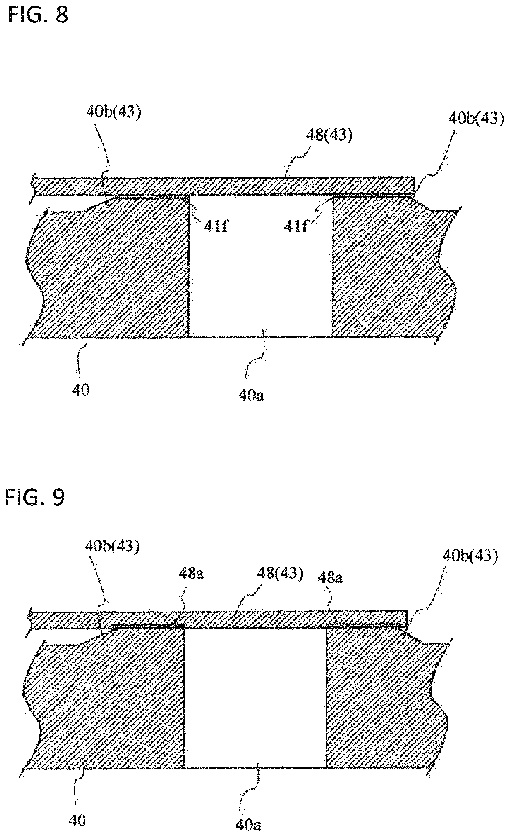

Resin coating may be applied to either the contact portion of the valve seat 40b or the contact portion of the valve body 48. FIG. 8 is a sectional view illustrating another example of a position where resin coating is applied as the temperature rise inhibiting means in the discharge valve 43. FIG. 9 is a sectional view illustrating further another example of a position where resin coating is applied as the temperature rise inhibiting means in the discharge valve 43. FIG. 8 and FIG. 9 are enlarged views of the part enclosed by the broken line R in FIG. 6, which correspond to the aforementioned FIG. 7. As illustrated in FIG. 8, resin coating may be applied only to the contact portion of the valve seat 40b (valve seat coating portion 41f). Alternatively, as illustrated in FIG. 9, resin coating may be applied only to the contact portion of the valve body 48 (valve body coating portion 48a).

When resin coating is applied to the valve body 48 or valve seat 40b of the discharge valve 43, the impact with which the contact portion of the valve body 48 hits against the contact portion of the valve seat 40b is relaxed so that it is possible to reduce frictional heat generated when the contact portion of the valve body 48 hits against the contact portion of the valve seat 40b. Thus, the temperature of the discharge valve 43 is substantially equal to the temperature of the working refrigerant which has been compressed in the compression chamber. In addition, the temperature at which the HFO is decomposed under the pressure around the discharge valve 43 (that is, the pressure of the working refrigerant which has been compressed in the compression chamber) is much higher than the temperature of the working refrigerant which has been compressed in the compression chamber. Accordingly, when resin coating is applied to the valve body 48 or valve seat 40b of the discharge valve 43, the temperature of the discharge valve 43 can be inhibited from rising to at least the temperature at which the HFO is decomposed. Therefore, when a working fluid containing an HFO is used, it is possible to inhibit decomposition of the HFO effectively.

The material of the resin coating to be applied to the discharge valve 43 is selected in consideration of heat resistance, tensile strength, impact resistance, abrasion resistance, chemical attack and the like. An engineering plastic having a heat resistant temperature of 100°C or more, a strength of 49.0 MPa or more, and a bending elastic modulus of 2.4 GPa or more, or a super engineering plastic having a higher heat resistant temperature of 150°C or more, a strength of 49.0 MPa or more, and a bending elastic modulus of 2.4 GPa or more, is desired as the material of the resin coating to be applied to the discharge valve 43.

Examples of the engineering plastic include polyamide (PA), polyacetal (POM), polybutylene terephthalate (PBT), polyethylene terephthalate (PET), syndiotactic polystyrene (SPS), polycarbonate (PC), and modified polyphenylene ether (mPPE).

Examples of the super engineering plastic include polyphenylene sulfide (PPS), polyether ether ketone (PEEK), liquid crystal polymer (LCP), fluororesin, polyether nitrile (PEN), polysulfone (PSF), polyethersulfone (PES), polyarylate (PAR), polyamide imide (PAI), polyetherimide (PEI), and thermoplastic polyimide (PI).

The engineering plastic or the super engineering plastic may contain additives such as an antiwear additive if necessary.

The place where resin coating is applied is not limited to the discharge valve 43, but resin coating may be applied to sliding parts where metals abut each other inside the compressor 10 illustrated in FIG. 3. In this manner, frictional heat can be inhibited from being generated in the sliding parts where metals abut each other, in the same manner as in the aforementioned case of the discharge valve 43 (see FIG. 5 and FIG. 6). Thus, when a working fluid containing an HFO is used, it is possible to inhibit decomposition of the HFO effectively.

Embodiment 2

Embodiment 2 of the present invention will be described below with reference to the drawings. Elements substantially the same as those in Embodiment 1 are referenced correspondingly, and their description will be omitted.

The working refrigerant of the present invention is a working fluid containing an HFO having a double bond in its molecular structure, as described in Embodiment 1. The schematic configuration of the refrigeration cycle apparatus in the present embodiment is the same as those described with reference to FIG. 1 in Embodiment 1. In addition, the schematic configuration of the compressor of the refrigeration cycle apparatus in the present embodiment is the same as those described with reference to FIG. 3 in Embodiment 1. Embodiment 2 is different from Embodiment 1 only in the structure of the discharge valve.

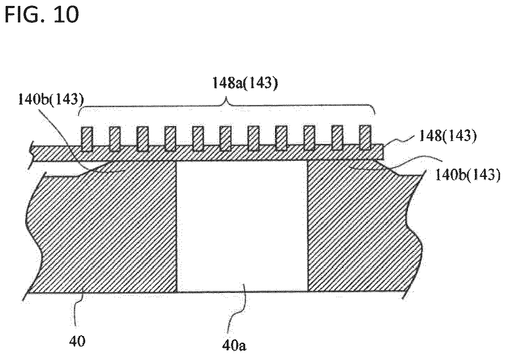

FIG. 10 is an enlarged sectional view of the periphery of a discharge valve 143. FIG. 10 corresponds to FIG. 7 of Embodiment 1. As illustrated in FIG. 10, a heat radiating fin 148a as a temperature rise inhibiting means that inhibits a temperature rise in the discharge valve 143 is formed on an upper surface of a valve body 148 of the discharge valve 143.

The heat radiating fin 148a is formed to increase the surface area of the valve body 148. Thus, the heat radiation efficiency of the discharge valve 143 is improved so that the temperature of the discharge valve 143 can be inhibited from increasing to at least the temperature at which the HFO is decomposed under the pressure of the working fluid compressed by the compression mechanism 30.

As described above, the temperature rise inhibiting means that inhibits a temperature rise in the discharge valve is provided in the discharge valve, so that when a working fluid containing an HFO is used, the decomposition of the HFO can be inhibited effectively.

The present invention is not limited to the aforementioned embodiments, but may be changed suitably without departing from the gist of the invention. For example, although the aforementioned embodiments have been described on the assumption that the compressor of the refrigeration cycle apparatus is a rotary compressor, the present invention is not limited thereto. For example, although the compressor is a rotary compressor in the aforementioned embodiments, the compressor may be, for example, a scroll compressor.

In the description of Embodiment 1, the temperature rise caused by adiabatic compression (Factor 1) is described as one of major factors to increase the temperature of the working fluid inside the compressor 10 illustrated in FIG. 3. As measures against Factor 1, for example, an operation mode changeover system for changing the operation mode between two operation modes may be provided in the refrigeration cycle apparatus 1 illustrated in FIG. 1. The two operation modes include an operation mode for normal time (normal operation mode) and an operation mode with a smaller pressure ratio than in the normal operation mode (temperature rise inhibiting operation mode). Here, the pressure ratio is a value obtained by dividing the pressure of discharged gas by the pressure of sucked vapor in the compressor 10. The operation mode changeover system corresponds to the temperature rise inhibiting means that inhibits a temperature rise causing decomposition of the HFO within the refrigeration cycle.

When the pressure ratio is increased, the temperature (discharge temperature) of the working fluid which has been compressed by the compressor 10 increases. On the contrary, when the pressure ratio is decreased, the discharge temperature drops down. That is, when the operation mode is changed from the normal operation mode to the temperature rise inhibiting operation mode, the discharge temperature can be decreased. The operation mode changeover system changes the operation mode between the normal operation mode and the temperature rise inhibiting operation mode depending on the temperature (discharge temperature) of the working fluid discharged from the compressor 10. Specifically, the refrigeration cycle apparatus 1 is operated in the normal operation mode when the discharge temperature is not higher than the temperature (decomposition inducing temperature) at which the HFO having a double bond in its molecular structure may be decomposed under the discharge pressure, and the refrigeration cycle apparatus 1 is operated in the temperature rise inhibiting operation mode when the discharge temperature is higher than the decomposition inducing temperature. In this manner, the temperature rise within the refrigeration cycle can be avoided to inhibit the decomposition of the HFO.

In addition, in the description of Embodiment 1, the temperature rise caused by compression loss (Factor 2) is described as one of the major factors to increase the temperature of the working fluid inside the compressor 10 illustrated in FIG. 3. As measures against Factor 2, for example, in the upper closing member 40 of the compressor 10 illustrated in FIG. 3, the ratio between the stroke volume of the compression mechanism 30 and the volume of the discharge hole 40a (see FIG. 6) formed in the upper closing member 40 may be optimized so as to minimize the loss generated in the discharge hole 40a.

The present application is based on a Japanese patent application No. 2015-255606 filed on December 28, 2015, the contents of which are incorporated herein by reference.

Description of Reference Numerals and Signs

| | |
|---|---|
| 1 | Refrigeration cycle apparatus |
| 10 | Compressor |
| 12 | Condenser |
| 13 | Expansion mechanism |
| 14 | Evaporator |
| 20 | Drive mechanism |
| 31 | Roller |
| 32 | Cylinder |
| 40 | Upper closing member |
| 40a | Discharge hole |
| 40b | Valve seat |
| 41f | Valve seat coating portion |
| 43 | Discharge valve |
| 47 | High-pressure space |
| 48 | Valve body |
| 48a | Valve body coating portion |
| 60 | Lower closing member |

**Claims**

1. A refrigeration cycle apparatus including a compressor to compress a working fluid containing a hydrofluoroolefin (HFO) having a double bond in a molecular structure thereof to perform a refrigeration cycle, the refrigeration cycle apparatus comprising a temperature rise inhibiting means which inhibits a temperature rise within the refrigeration cycle.

2. The refrigeration cycle apparatus according to claim 1, wherein:

the compressor includes a compression mechanism which compresses the working fluid in a compression chamber, a high-pressure space which receives the working fluid which has been compressed in the compression chamber and discharged therefrom, and a discharge valve which is provided between the compression chamber and the high-pressure space and intermittently discharges the working fluid from the compression chamber to the high-pressure space; and

the temperature rise inhibiting means is provided in the discharge valve.

3. The refrigeration cycle apparatus according to claim 2, wherein:

   the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and

   resin coating as the temperature rise inhibiting means is applied to a contact portion of the valve seat on which the valve body abuts in the closed state and a contact portion of the valve body on which the valve seat abuts in the closed state.

4. The refrigeration cycle apparatus according to claim 2, wherein:

   the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and

   resin coating as the temperature rise inhibiting means is applied to a contact portion of the valve seat on which the valve body abuts in the closed state.

5. The refrigeration cycle apparatus according to claim 2, wherein:

   the discharge valve includes a valve seat which protrudes toward the high-pressure space in a periphery of a hole serving as a flow path of the working fluid which has been compressed, and a valve body which is configured to abut on the valve seat in a closed state and to separate from the valve seat in an open state, so as to open and close the hole; and

   resin coating as the temperature rise inhibiting means is applied to a contact portion of the valve body on which the valve seat abuts in the closed state.

6. The refrigeration cycle apparatus according to any one of claims 3 to 5, wherein the resin coating is a super engineering plastic.

7. The refrigeration cycle apparatus according to any one of claims 1 to 6, wherein the HFO contains 1,1,2-trifluoroethylene.

FIG. 1

FIG. 2

# FIG. 3

FIG. 4

FIG. 5

FIG. 6

FIG. 7

FIG. 8

40b(43)  48(43)  40b(43)

41f  41f

40  40a

FIG. 9

40b(43)  48a  48(43)  48a  40b(43)

40  40a

FIG. 10

## INTERNATIONAL SEARCH REPORT

| | International application No. |
| --- | --- |
| | PCT/JP2016/086727 |

**A. CLASSIFICATION OF SUBJECT MATTER**
*F04B39/10*(2006.01)i, *C09K5/04*(2006.01)i, *F04C29/12*(2006.01)i, *F16K1/42*(2006.01)i, *F16K15/16*(2006.01)i

According to International Patent Classification (IPC) or to both national classification and IPC

**B. FIELDS SEARCHED**

Minimum documentation searched (classification system followed by classification symbols)
F04B39/10, C09K5/04, F04C29/12, F16K1/42, F16K15/16

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2014-238012 A  (Panasonic Corp.), 18 December 2014 (18.12.2014), paragraphs [0018], [0060] (Family: none) | 1-7 |
| Y | JP 2008-2387 A  (Toshiba Carrier Corp.), 10 January 2008 (10.01.2008), paragraphs [0008] to [0009] (Family: none) | 1-7 |
| Y | JP 2015-214930 A  (Panasonic Intellectual Property Management Co., Ltd.), 03 December 2015 (03.12.2015), claims (Family: none) | 7 |

☒  Further documents are listed in the continuation of Box C.      ☐   See patent family annex.

| | | |
| --- | --- | --- |
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| 06 February 2017 (06.02.17) | 07 March 2017 (07.03.17) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/086727

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-48067 A (Seiko Instruments Inc.), 15 February 2002 (15.02.2002), paragraphs [0008], [0031] (Family: none) | 1-7 |

Form PCT/ISA/210 (continuation of second sheet) (January 2015)

24

**EP 3 399 189 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015145452 A
- JP 2015255606 A